# EUROPEAN PATENT SPECIFICATION

(11) **EP 3 376 873 B1**
(45) Date of publication and mention of the grant of the patent: **13.03.2019**
(21) Application number: 16794250.7
(22) Date of filing: 03.11.2016
(51) Int. Cl.: A23D 7/00, A23D 7/02

(54) **PROCESS FOR PREPARING FAT CONTINUOUS EMULSIONS CONTAINING MIDSTOCK OR CREAM**
VERFAHREN ZUR HERSTELLUNG VON MIDSTOCK- ODER CREMEHALTIGEN EMULSIONEN MIT KONTINUIERLICHER FETTPHASE
PROCÉDÉ DE PRÉPARATION D'ÉMULSIONS CONTINUES GRASSES CONTENANT DU MIDSTOCK OU UNE CRÈME

(30) Priority: 20.11.2015 EP 15195607
(43) Date of publication of application: 26.09.2018
(73) Proprietor: Unilever N.V., 3013 AL Rotterdam (NL); Unilever PLC, London, Greater London EC4Y 0DY (GB); Upfield Europe B.V., 3071 JL Rotterdam (NL); Unilever BCS Limited, London, EC4Y 0DY (GB)
(72) Inventor: DE MAN, Teunis, 3133 AT Vlaardingen (NL); MELNIKOV, Sergey, Michailovich, 20097 Hamburg (DE)
(74) Representative: EP&C
(86) International application number: PCT/EP2016/076573
(87) International publication number: WO 2017/084886

(56) References cited:
- EP-A1- 2 654 443
- WO-A1-2005/014158
- WO-A1-2015/052037
- GB-A- 1 327 511
- US-A- 3 472 661

## Description

### Field of invention

The present invention relates to a process for preparing fat-continuous emulsions (such as e.g. spreads and margarines) which emulsions contain midstock (which may be a dairy fat), next to the more usual fat components oil and hardstock. The midstock may also be added as dairy cream.

### Background of invention

Edible water-in-oil emulsions, which comprise a continuous fat phase and a dispersed aqueous phase, are well known in the art and include for example margarine.

The fat phase of margarine and similar water-in-oil emulsions is typically a mixture of liquid oil (i.e. fat that is liquid at ambient temperature) and fat which is solid at ambient temperatures. The solid fat, also called structuring fat or hardstock fat, serves to structure the fat phase and helps to stabilize the aqueous phase (e.g. in the form of droplets) by forming a fat crystal network. Ideally the structuring fat has such properties that it melts or dissolves at mouth temperature otherwise the product may have a heavy and/or waxy mouthfeel.

Margarine is generally defined as a composition containing at least 80 wt. % fat and about 20 wt. % aqueous phase. In contrast, (spreadable) emulsions containing less than 80 wt. % fat are generally called spreads. Nowadays the terms margarine and spread are sometimes used interchangeably although in some countries the commercial use of the term margarine is subject to certain regulatory requirements.

In the market place margarine is generally sold as one of three principal types of water-in-oil emulsion:
- hard or stick margarine (also referred to as wrappers);
- (typically softer) tub margarine (typically named "spreads)"; and
- liquid or pourable margarine.

Wrapper margarines and tub margarines are non-pourable and generally contain a higher amount of hardstock fat than liquid or pourable margarines.

Another fat component next to liquid oil and hardstock fat in spreads and margarines may be so-called mid-stock. Midstocks are fats that do have solid crystals at room temperature (20°C), but only after having had sufficient time at a low temperature. This is because midstocks are slow crystallizing fats, when compared to hardstocks. Midstocks can be cooled without having immediate formation of solids. At 40°C the midstock will be melted.

Midstocks can be present for a variety of reasons, such as e.g. as a cheap ingredient or for the desired melting behaviour or for their effect on quality of the final product. Typical examples of midstocks from vegetable origin are for instance palm kernel oil (PK), coconut fat (CN), fully hardened coconut fat (CN31), palm oil (PO) or mid- or low melting fractions thereof. Typical examples of midstocks from animal origin are anhydrous milkfat (AMF, when without any further fraction indication it is understood as the complete fat fraction of milk without the water, protein, milk sugar and salt), edible tallow (ET), beef tallow (BT) or mid melting-or low melting fractions thereof. Midstocks can also be blends of liquid oils and high melting fats. Although the fat industry is currently avoiding trans fatty acid containing fats, it still may want to be applied as mid stock at low or acceptable amounts.

Often, e.g. for health reasons, said liquid oils, hardstock fats, and midstock fats are of vegetable origin. However, since a while there is a demand (e.g. for reasons of taste or perceived artisanal character) for fat-continuous emulsions such as spreads or margarines that contain, next to vegetable oils and fats, some dairy fat. The amount can vary, e.g. between 3 and 50 % of the total fat may be fat from dairy origin (dairy fat, usually from cows). Typical examples are melanges of conventional all-vegetable spreads with a few % butter fat or butter fat fraction mixed into the product. Butter fat or mid- and low melting butter fat fractions may be seen as midstock, as they usually have a lower melting point than hardstock and/or are softer. It should be noted though, that most midstocks are of vegetable origin.

The general process for the manufacture of water-in-oil emulsions, using the votator or churn process, encompasses the following steps:
1. Mixing of the liquid oil, the hardstock fat and the water-phase at a temperature at which the hardstock fat is definitely liquid;
2. cooling of the mixture under high shear to induce crystallization of the hardstock fat to create an emulsion;
3. formation of a fat crystal network to stabilize the resulting emulsion and give the product some degree of firmness;
4. modification of the crystal network to produce the desired firmness, confer plasticity and reduce the water droplet size.

These steps are usually conducted in a process that involves apparatus that allow heating, cooling and mechanical working of the ingredients, such as the churn process or the votator process. The churn process and the votator process are described in the Ullmans Encyclopedia, Fifth Edition, Volume A 16, pages 156-158.A disadvantage of such process is that it requires heating up and cooling the whole formulation, e.g. including all oil and all water. This costs a lot of energy. Melanges containing dairy fat next to vegetable fat as set out above can easily be made with such votator process, in which butter fat is melted and added to the total ingredient mix that is fed to the processing line.

An alternative to the votator or churn process for the manufacture of margarines which is known involves the use of fat powder comprising hardstock fat (i.e. pre-crystallized fat) (WO 2005/014158). The fat powder used in such process is also known as ScMM powder (super critical melt micronisation) or PGSS process (particles from gas saturated solutions). Spreads can be made by blending at ambient or colder temperature liquid oil, the fat powder and an aqueous phase. This overcomes having to heat and cool the entire formulation. Disadvantages of such process relate e.g. to the need for equipment which is new in margarine and spreads making (pressurizing and handling CO₂, spraying melted fat, handling fat powder), capital expenditure. Also, the method proves to be less attractive for high-fat products (e.g. 70-85%).

A further alternative for making spreads is known e.g. from GB1327511. This reference discloses a process for the preparation of low-calorie spreads by mixing a first liquid (which is at a temperature of at least 28°C) which consists of a fat phase containing crystallisable material with a second liquid (which is at a temperature of at most 8°C) which is substantially free from crystallisable material. At least part of the second liquid is composed of the aqueous phase, and may further contain oils which are liquid at 2°C. The two liquids are fed separately to a high pressure dosing pump, allowing continuous dosing of the liquids.

US 3472661 discloses a process for preparing liquid margarines, by a process in which a liquid vegetable oil is blended with a thickening agent (a high melting fat), an emulsifier and a phosphatide, and chilling the blend to a point at which it partially crystallises, followed by holding for at least five hours and then vigorously agitating the blend to obtain a uniform dispersion of the fat crystals. The aqueous phase is then added to the fat phase.

There is a desire for a process that allows the manufacture of fat-continuous emulsions (e.g. spreads) comprising vegetable oil and hardstock, yet which also may contain midstocks, and in particular a midstock of dairy origin, and which process does not require heating up and cooling of the entire formulation, or almost entire formulation (for reasons of energy consumption) as is required for making such with the known votator process, and which process does not need complex equipment such as is e.g. needed for making the fat powder using the PGSS process. Preferably, this process allows production of spreads for use in tropical conditions.

### Summary of the invention

It was found that these objectives can be met, at least in part, by a process for preparing a fat-continuous emulsion, which emulsion comprises 15-70% of an aqueous phase and 30-85% of a fat phase, said fat phase comprising 1-35% midstock (weight % on total fat phase), 3-50 % hardstock (weight % on total fat phase formulation), and 10-80% oil (weight % on total fat phase), which process comprises the steps of:
a. providing a water-continuous dispersion comprising the aqueous phase as the continuous phase with dispersed therein oil and midstock fraction, wherein at least 10% by weight of said midstock fraction dispersed in the aqueous phase is crystallized;
b. providing the melted hardstock fat;
c. combining the water-continuous dispersion of step a. with the melted hardstock fat of step b.;
d. subjecting the mixture obtained after step c. to a high shear device to provide a fat-continuous emulsion,
wherein the temperature of the mixture obtained from step c. is below the melting point of the hardstock fat.

### Detailed description of the invention

"Midstock" ("midstock" and "midstock fat" herein have the same meaning) is herein to be understood as any edible triglyceride fat or fraction which is solid when kept for 1 hour at 20°C, and which in the crystallisation speed test as described below gives less than 5% fat crystals by weight on the total fat fraction measured after 1 minute at 10°C.

"Hardstock" ("hardstock" and "hardstock fat" and "hardstock phase" herein have the same meaning) is herein to be understood as any edible triglyceride fat or fraction which is solid when kept for 1 hour at 20°C, and which in the crystallisation speed test as described below gives at least 5% or more fat crystals by weight on the total fat fraction measured after 1 minute at 10°C.

In the above definition, the crystallisation speed test is as follows:
- a 3 gram sample of the fat (hardstock or midstock) to be measured is heated to 80°C in a glass NMR tube in an aluminium block kept in a thermostated water bath and kept there for at least 5 minutes;
- said sample is then cooled to 60°C, by putting the tube in an aluminum block kept in another thermostated water bath and kept there for at least 5 minutes;
- said sample is then quickly cooled to 10°C (at which we set t=0), and kept at that temperature, by putting the tube in an aluminium block kept in another thermostated water bath and kept for 1 min residence time in the thermostatic block;
- during the keeping of the sample at 10°C the amount of crystals formed in the fat (in weight %) is measured by NMR, at the regular time intervals, including at 1 minute after t=0 (i.e. at t=60 seconds).

In the above method, measurement of the amount of crystals formed can be done at other moments (different tubes, kept for e.g. 30 seconds, 2, 4, 8, 15 minutes etcetera) and with the resulting data an isothermal crystallisation graph can be prepared.

A hardstock phase can be a blend of midstock and hardstock still having the properties and specification of a hardstock. A hardstock or hardstock phase immediately forms solids upon cooling.

"Oil" is herein to be understood as an edible lipid material, at least 80% by weight being triglycerides of fatty acids, which edible lipid material is liquid at 20°C, and which is not hardstock or midstock.

It was found that the process in which the hardstock fat is crystallised by blending it with cold ingredients like the aqueous phase and/or the oil, such as is known e.g. from GB 1327511, is a very suitable process when wishing to include a midstock fat. It was also found that when following such process, it is beneficial that said midstock fat is pre-crystallised and present in the cold aqueous phase prior to mixing with the melted hardstock fat. Such benefits include a smaller droplet size, a ratio Stevens value over fat solids that is reduced, and a tolerance for the presence of proteins. When the preparation of the aqueous phase containing midstock and liquid oil is carried out batch-wise it is believed that a further advantage of having the midstock present in pre-crystallised form is that the already crystallized midstock stabilized the aqueous dispersion of the liquid oil in the aqueous phase.

In the process of the present invention, for ease of processing operation (e.g. equipment use) and efficiency, it is preferred that all of the aqueous phase and all of the oil phase of the final product are part of the water-continuous dispersion of step a.

In one embodiment, in the process of the invention the dispersion of step a. is conveniently obtained by mixing continuously in-line an aqueous dispersion of the midstock at a temperature of from 0 to 15°C with the oil at a temperature of from 0 to 25°C. This is especially preferred if the midstock is of vegetable origin. Alternatively, e.g. when the aqueous phase comprising the midstock is dairy cream, the dispersion of step a. is preferably obtained by providing a stirred tank comprising the oil dispersed in the aqueous phase and the midstock dispersed in the aqueous phase, which stirred tank is held at a temperature of from 0 to 15°C for at least 30 minutes.

In the process according to the present invention, in order to be able to create a low temperature in which the hardstock fat can crystallise, it is preferred that the temperature of the aqueous dispersion in step a. is between 0 and 10°C.

The hardstock is added in melted form. Thus, the temperature of the melted hardstock should be such that all the hardstock is melted, but preferably be as low as possible, as e.g. a hardstock at 90°C would require too much cooling capacity from the aqueous phase to which it is added. Thus, in the present invention, for hardstock fats as are commonly used e.g. in spread manufacture, it is then usually preferred to that the temperature of the melted hardstock in step b. is between 30°C and 55°C, more preferably between 35°C and 50°C, even more preferably between 35°C and 45°C.

Preferably, for reasons of consumer acceptance and the image of being all natural, the hardstock fat comprises at least 70% (more preferably at least 80%) of triglyceride esters of fatty acids (TAG's), by weight based on the total hardstock fat.

In the process according to the present invention, it is preferred, in order to get good quality products, that at least part of the midstock that is dispersed in the aqueous phase is in crystallised form. Hence, in the present invention it is preferred that at least 10% by weight of said midstock fraction dispersed in the aqueous phase is crystallized. Good quality products in this connection relates to the full range of quality parameters: it includes appearance, plasticity, body and/or firmness and is mainly related to color, homogeneity, droplet size and crystal size and network). Midstock crystals have a certain effect on the formation of solids and on stabilizing the emulsion during and after mixing with the hardstock.

It is mentioned above that the midstock fat phase in the present invention can be from vegetable origin, from animal origin (e.g. dairy fat) or be a mixture of the two. As the present process easily allows the inclusion of e.g. dairy fat in the form of cream without having to heat and cool the entire formulation, it is preferred in the present invention that the midstock is a dairy fat, and even more preferably at least part or all of the dairy fat is cream. Following this, it is preferred in the present process that the water-continuous dispersion of step a. comprises 50-100% (by weight based on the aqueous dispersion) of cream.

In order to achieve the desired phase inversion of the aqueous dispersion into a fat-continuous emulsion with water droplets of the desired size and the formation of small crystals of hardstock that can stabilise such emulsion and that can give sufficient firmness to the product, the mixing of the combination of aqueous phase and oil with the melted hardstock should go in a swift way, and also the mixing operation should only result in a small temperature increase due to such high shear mixing. Regarding the latter, it is preferred that the high shear device results in a temperature increase of the emulsion of less than 5°C, more preferably a temperature increase of the emulsion of less than 3°C, when comparing temperature of the aqueous dispersion at the inlet and the temperature of the emulsion at the outlet of the high shear device. It was found that a high shear mixer having a rotor and a stator, which mixer has a residence time of less than 3 seconds, and sufficient shear to effect emulsification of water droplets in oil having a droplet size d_{3,3} of less than 15 micrometer, can achieve such objectives. Hence, preferably the high shear device in step d. is such high shear mixer. A typical example of a mixer that can achieve the desired objectives is a fluid division mixer (FDM) as marketed by Maelstrom and as is described e.g. in EP1331988, in WO2002/38263, and in WO2013/037605.

Depending on the product mixture (e.g. amount of midstock, presence of protein) it may be desired to subject the mixture in step d. to a high shear device is followed by subjecting the mixture to a pin stirrer (in other words: to add a pin-stirrer after the process as set out above). Pin stirrers are also known in margarine processing as C-units.

For reasons of solubility of midstock in liquid oil in the process as set out herein it is preferred that the weight ratio oil: midstock is between 1 : 0.2 and 1 : 3, more preferably between 1 : 0.4 and 1 : 2. Beyond the lower end of the range there may be a chance of not having solidified midstock, beyond the higher end of the range there may be a chance of having too much solids hampering the process and homogeneity of premixes in the tank.

In order to ensure sufficient cooling capacity for the melted hardstock, and for reaching the desired firmness and stability of the resulting product it is in the present invention that the weight ratio of vegetable oil: hardstock is from 1 : 0.1 to 1 : 1, more preferably from 1 : 0.2 to 1 : 0.8.

Although the process according to the present invention may yield liquid products or wrapper-type margarines, it is preferred that the fat continuous emulsion made by this process is a spreadable emulsion. A spreadable emulsion is an emulsion of the composition as described herein, which furthermore has a Stevens value of between 30 and 300 gram, when measured at 5°C. Total desired fat levels are generally (for consumer preference) 40-80% fat, by weight based on the total product.

Suitable products, especially for spreadable emulsions, can be made when in the process the fat phase comprises 5-25% (preferably 8-20) midstock (weight % on total fat phase), 5-30% (preferably 10-25%) hardstock (weight % on total fat phase), and 30-70% (preferably 40-60%) oil (weight % on total fat phase). Hence, these are preferred ranges for these components.

### Examples

### Methods

### Water droplet size distribution of W/O emulsions

The normal terminology for Nuclear Magnetic Resonance (NMR) is used throughout this method. On the basis of this method the parameters d_{3,3} and exp(σ) of a lognormal water droplet size distribution can be determined. The d_{3,3} is the volume weighted mean droplet diameter (in microns, in the present case) and e^{σ} (e-sigma) is the standard deviation of the logarithm of the droplet diameter.

The NMR signal (echo height) of the protons of the water in a water -in-oil emulsion are measured using a sequence of 4 radio frequency pulses in the presence (echo height E) and absence (echo height E*) of two magnetic field gradient pulses as a function of the gradient power. The oil protons are suppressed in the first part of the sequence by a relaxation filter. The ratio (R=E/E*) reflects the extent of restriction of the translational mobility of the water molecules in the water droplets and thereby is a measure of the water droplet size. By a mathematical procedure -which uses the lognormal droplet size distribution - the parameters of the water droplet size distribution d_{3,3} (volume weighed geometric mean diameter) and σ (distribution width) are calculated.

A Bruker magnet with a field of 0.47 Tesla (20 MHz proton frequency) with an air gap of 25 mm is used (NMR Spectrometer Bruker Minispec MQ20 Grad, ex Bruker Optik GmbH, DE).

### Stevens value

Stevens values indicates a products hardness or firmness. The Stevens value was measured with a Stevens penetrometer (Brookfield LFRA Texture Analyser (LFRA 1500), ex Brookfield Engineering Labs, UK) equipped with a stainless steel probe with a diameter of 6.35 mm and operated in "normal" mode. Temperature of the sample: 5°C (referred to as S5, unless measured at a different temperature, e.g. 20°C for example 3, referred to as S20). The probe is pushed into the product at a speed of 2 mm/s, a trigger force of 5 gram from a distance of 10 mm. The force required is read from the digital display and is expressed in grams.

### Solid Fat Content (SFC) measurements of fat

The solid fat content (SFC) in these examples is expressed as N-value, as defined in Fette, Seifen Anstrichmittel 80 180-186 (1978). The stabilization profile applied is heating to a temperature of 80°C, keeping the oil for at least 10 minutes at 60°C or higher, keeping the oil for 1 hour at 0°C and then 30 minutes at the measuring temperature.

### S5/N5

The S5/N5 ratio is the Stevens value as measured at 5°C over the solid fat content in the sample as measured by NMR at 5°C, the SFC as described above.

Likewise, the S20/N20 is the same ratio, but now of a Stevens value and solid fat content measured at 20°C.

### Example 1

A spreadable edible emulsion was prepared having the recipe as in Table 1.

**Table 1**

| Component | Amount (wt % on total) |
|---|---|
| OIL | |
| RP oil | 38.65% |

| AQUEOUS PHASE AND MIDSTOCK | |
|---|---|
| Cream (40% fat, of which 20% crystals at 8°C) | 44% |
| Water | 2% |
| Salt | 1.2% |
| Lactic acid | to pH 5 |
| | |

| HARDSTOCK FAT | |
|---|---|
| erES48 (interesterified mixture of 65% dry fractionated palm oil stearin IB14 and 35% palm kernel oil) | 7.7% |
| mfPOs IV45 (multifractionated palm oil stearin) | 6.3% |
| Soy lecithin | 0.15% |

The composition was made by first preparing the aqueous phase with midstock, by blending cream with water, salt and an appropriate amount of lactic acid to lower the pH to 5. The aqueous phase so-prepared was kept at 8°C. At this temperature, the fat phase (midstock) dispersed in the aqueous phase contained about 20% solids.

The aqueous phase with midstock so-obtained was then mixed with the oil (which was at a temperature of 8°C as well) in the line in a continuous way, followed by mixing with the hardstock mixture, which was at a temperature of 32°C and in liquid form. This was fed to a high shear mixer (operating at 2800 rpm). This mixer was of the type FDM, or fluid division mixer by Maelstrom, similar as in WO 02/38263, with a concentric rotor-stator system with 4 rows of cavities in both rotor and stator, with a total volume of 0.083 liter. The cavities in the rotor and stator were spherical segments which are open on both vertical and horizontal faces. The rotor and stator are based on a stepped conical form so that the diameter of the cone increases from inlet to outlet (about 50 up to 150 mm). The mixer is commercially available from Maelstrom (http://www.maelstrom-apt.com/product-dc50/). This operation was followed by subjecting the so-obtained composition to a 3 liter pin-stirrer operating at 100 rpm. The resulting product coming out of the high shear mixer had the appearance of a spread, and was at a temperature of 18°C. Samples of both the product after the FDM mixer (i.e. before the pin-stirrer) as well as after the pin-stirrer were obtained (FDM, and FDM-C, respectively in table 6).

### Example 2

A spreadable edible emulsion was prepared having the recipe as in Table 2.

**Table 2**

| component | Amount (wt % on total) |
|---|---|
| OIL | |
| RP oil | 42.4% |
| | |

| AQUEOUS PHASE AND MIDSTOCK | |
|---|---|
| Butter fat AMF (summer butter) (55% crystals at 8°C) | 17.55% |
| Water | 27.8% |
| Soy lecithin | 0.15% |
| Salt | 1.2% |
| Butter milk powder | 1.2 |
| Lactic acid | to pH 5 |
| | |

| HARDSTOCK FAT | |
|---|---|
| erES48 (interesterified mixture of 65% dry fractionated palm oil stearin IB14 and 35% palm kernel oil) | 9.7% |

| | |
|---|---|
| AMF = Anhydrous Milk Fat | |

The composition was made by first preparing the aqueous phase by mixing the water, salt and butter milk powder at about 80°C and keeping this for about 10 minutes at that temperature in order to have a pasteurised waterphase, before it was cooled down to about 60°C.

The midstock was molten at about 70°C, and lecithin added by separately heating 2 kg of the midstock with the lecithin up to about 75°C in a magnetron, followed by gently cooling down the total mixture to 60°C.

Then the midstock (molten butter fat containing the lecithin of about 60°C) was mixed and finely dispersed in to the pasteurised water phase, followed by adding appropriate amount of lactic acid to lower the pH to 5.

While stirring this finely dispersed oil in water mixture was then cooled, by applying cold water of about 5°C to the jacket of the tank, until after about an hour a temperature of about 7°C was obtained. The aqueous phase so-prepared was kept at 8°C. At this temperature, it contained about 20% solids on water phase including midstock, which is about 55% of the total midstock in the total aqueous phase (55% of AMF is crystals; amount AMF in aqueous phase is 17.55%; aqueous phase is 47.9% of total composition).

The aqueous phase with midstock so-obtained was then mixed with the oil (which was at a temperature of 8°C as well) in the line in a continuous way, followed by mixing with the hardstock fat, which was at a temperature of 32°C and in liquid form. This was fed at 200 kg/h to a high shear mixer, operating at 2500 rpm, (the same high shear mixing device as in example 1), followed by a 3 litre pin stirrer (C-unit) operating at 100 rpm. The resulting product had the appearance of a spread, and was at a temperature of about 16°C.

Samples of both the product after the FDM mixer (i.e. before the pin-stirrer) as well as after the pin-stirrer were obtained (FDM, and FDM-C, respectively in table 6).

### Comparative example B

A spread was prepared with the same overall composition as in example 2, but now the mid-stock in the aqueous phase was not pre-crystallised. The aqueous phase with no pre-crystallised fat was prepared by using the same mixing method as with the above example, excluding the cooling step in the tank. Instead, the aqueous phase was only cooled just before mixing with the oil phase and hardstock, in the line (by a tubular heat exchanger) down to about 8°C. Due to the slow crystallization properties of midstock the mix did not contain any fat solids at the moment of entrance of the high shear mixer. Otherwise the processing conditions were the same as for example 2.

### Example 3

A spreadable edible emulsion suitable for use in a tropical environment (high temperature stability) was prepared having the recipe as in Table 3.

**Table 3**

| component | Amount (wt % on total) |
|---|---|
| OIL | |
| RP oil | 23% |
| | |

| AQUEOUS PHASE AND MIDSTOCK | |
|---|---|
| Palm oil (32% crystals at 8°C) | 2% |
| Water | 38% |
| Soy lecithin | 0.1% |
| Salt | 1.7% |
| Skimmed milk powder | 0.5% |
| Citric acid | to pH 5 |
| | |

| HARDSTOCK FAT PHASE | |
|---|---|
| Palm oil | 29% |
| POs58 (palm oil stearin fraction) | 5% |
| Monoglyceride emulsifier | 0.6% |
| Soy lecithin | 0.1% |

The composition was made by first preparing the aqueous phase with midstock, by mixing the skimmed milk powder in to 1/5^{th} of the water at about 75°C followed by cooling to 5°C, then the palm oil and soy lecithin mixture at 50°C was added under vigorous stirring, ending at about 9°C resulting in finely dispersed midstock droplets in water. With light microscopy it was established that some of the droplets were fully crystallized while some of them were still liquid. Then this water phase was completed by mixing in the second pre-prepared water phase.

The preparation method of the second part of the water phase was done by mixing the ingredients in to the remaining 4/5^{th} part of the water at about 75°C, followed by cooling down to about 8°C. The aqueous phase so-prepared was kept at 8°C. At this temperature, it contained about 1.5% by weight solids on total aqueous phase, which is about 32% of the total midstock in the total aqueous phase.

The hardstock phase was prepared by melting the fats at 70°C and by weighing and mixing them in a feed tank, then about 2 kg was taken to dissolve the lecithin at about 75°C and then about 2 kg was taken as well to dissolve the monoglyceride at about 75°C, using a magnetron to heat up the samples followed by mixing these two stock solutions in to the hardstock phase in the tank heated at about 50°C.

The aqueous phase with midstock so-obtained was then mixed with the oil (which was at a temperature of 8°C as well) in the line in a continuous way, followed by mixing with the hardstock mixture, which was at a temperature of 45°C and in liquid form. This was fed at 200 kg/h in to a high shear mixer, operating at 2800 rpm (the same high shear mixing device as in example 1), followed by a 3 liter pin stirrer (C-unit) operating at 65 rpm.

The resulting product coming out of the high shear mixer had the appearance of a spread, and was at a temperature of about 25°C.

Samples of both the product after the FDM mixer (i.e. before the pin-stirrer) as well as after the pin-stirrer were obtained (FDM, and FDM-C, respectively in table 7).

### Example 4a (with protein)

The same net formulation of example 3 was now prepared by first preparing a dispersion in one feed tank of both the midstock as well as the oil in the aqueous phase (instead of blending the aqueous phase with the oil phase in-line followed by mixing with the melted hardstock, in example 3). All components were at 8°C. Due to the solubility of palm oil in oil, an extra 3% of palm oil had to be added to the water phase in order to compensate for this. The formulation is in table 4.

**Table 4**

| component | Amount (wt % on total) |
|---|---|
| AQUEOUS PHASE, OIL AND MIDSTOCK | |
| RP oil | 23% |
| Palm oil (32% solids at 8°C) | 5% |
| Water | 38% |
| Soy lecithin | 0.1% |
| Salt | 1.7% |
| Skimmed milk powder | 0.5% |
| Citric acid | to pH 4.5 |

| HARDSTOCK FAT PHASE | |
|---|---|
| Palm oil | 26% |
| POs58 (palm oil stearin fraction with a melting point of 58°C) | 5% |
| Monoglyceride emulsifier | 0.6% |
| Soy lecithin | 0.1% |

The hardstock phase thus has 3% less palm oil. The same preparation method was further used for the water phase and hardstock phase as in example 3.

The aqueous phase with midstock and oil so-obtained (at 8°C) was then mixed in-line with the hardstock mixture, which was at a temperature of 45°C and in liquid form. This was fed at 200 kg/h in to a high shear mixer, operating at 2800 rpm (the same high shear mixing device as in example 1), followed by a 3 liter pin stirrer operating at 65 rpm.

The resulting product coming out of the high shear mixer had the appearance of a spread, and was at a temperature of about 25°C.

Samples of both the product after the FDM mixer (i.e. before the pin-stirrer) as well as after the pin-stirrer were obtained (FDM, and FDM-C, respectively in table 7).

### Example 4b (without protein)

Using the same procedure as in Example 4a (with protein) a fat spread was produced without protein. In the formulation the protein was left out and compensated for with water. And in preparing the water phase the ingredients were dissolved in a comparable way, except for the splitting step of the water in 1/5^{th} and 4/5^{th} part, as there is no protein to be dissolved, and effect of oil in water emulsifying capacity of protein is lacking. Midstock is added to the complete water phase, instead of to the 1/5^{th} part in case of the protein example 4a.

### Results

**Table 6**

| | Example 1 | | Example 2 | | Comparative B to Ex2 | |
|---|---|---|---|---|---|---|
| Process | FDM-C | FDM | FDM-C | FDM | FDM-C | FDM |
| At 5°C | | | | | | |
| S5 (g) | 190 | 356 | 62 | 168 | 111 | 526 |
| D3.3 (µ) | 6.3 | 6.4 | 13.0 | 5.9 | 14.2 | 16.1 |
| e^{σ} | 1.5 | 1.7 | 2.3 | 1.7 | 2.0 | 2.3 |
| S5/N5 | 11.8 | 22.3 | 4.8 | 11.6 | 8.8 | 42.2 |

| After Cycle M2, at 5°C | | | | | | |
|---|---|---|---|---|---|---|
| d_{3,3} (µ) | 9.5 | 11.8 | 13.3 | 6.1 | >14 | >16 |
| e^{σ} | 1.8 | 2.1 | 2.3 | 1.6 | >2 | >2.3 |

All products with d_{3,3} below 10 having acceptable quality.

Cycle M2, to test ambient stability, is a storage test at 1 day at 25°C, 1 day at 5°C, 1 day at 25°C, 1 day at 5°C, 1 day at 25°C, 1day at 5°C, 1 day at 10°C followed by a stabilising period of at least two days at 5°C.

A high S5/N5 is desired, as it indicates that a high Stevens value with a low level of solids can be obtained. Likewise, a moderately high S20/N20 is preferred, e.g. for spreads to be used in the tropics. At the same time a droplet size d_{3,3} of about 10 micron or less and an e-sigma of about 2 or lower is preferred, for reason of microbiological stability and plasticity. The best products are with an S/N ratio between about 12 and 20, if the constraints for the droplets size are met. This is especially the case for fresh products.

**Table 7**

| | Example 3 | | Example 4b | | Example 4a | |
|---|---|---|---|---|---|---|
| Protein | YES | | NO | | YES | |
| Process | FDM-C | FDM | FDM-C | FDM | FDM-C | FDM |
| At 20°C | | | | | | |
| S20 (g) | 185 | 182 | 160 | 197 | 129 | 158 |
| d_{3,3} (µ) | 3.9 | 18.3 | 4.3 | 3.3 | 3.6 | 8.8 |
| e^{σ} | 2.0 | 3.8 | 1.8 | 1.9 | 1.9 | 3.0 |
| S20/N20 | 14.9 | 16.8 | 14.4 | 17.7 | 11.2 | 13.7 |

| After Cycle C, at 20°C | | | | | | |
|---|---|---|---|---|---|---|
| S20 (g) | 95 | 63 | 86 | 55 | 78 | 58 |
| d_{3,3} (µ) | 5.1 | 16.8 | 7.9 | 30.0 | 4.0 | 19.0 |
| e^{σ} | 1.9 | 3.0 | 1.7 | 4.3 | 1.9 | 4.3 |
| S20/N20 | 9.0 | 6.4 | 9.8 | 6.8 | 8.2 | 5.3 |

| After 10 days at 40°C, at 20°C | | | | | | |
|---|---|---|---|---|---|---|
| d_{3,3} (µ) | 25.9 | 56.0 | 18.7 | 42.0 | 15.8 | 25.0 |
| e^{σ} | 1.56 | 3.3 | 1.9 | 2.3 | 1.8 | 2.5 |

All products with d_{3,3} below 10 micron have an acceptable quality.

Nm is not measured.

Cycle C, to test ambient stability is resp. 2 days at 30°C, 4 days at 15°C, 1 day at 10°C followed by a stabilising period of at least two days at 20°C.

## Claims

1. Process for preparing a fat-continuous emulsion, which emulsion comprises 15-70% of an aqueous phase and 30-85% of a fat phase, said fat phase comprising 1-35% midstock (weight % on total fat phase), 3-50 % hardstock (weight % on total fat phase), and 10-80% oil (weight % on total fat phase), which process comprises the steps of:
a. providing a water-continuous dispersion at a temperature of between 0°C and 15°C comprising an aqueous phase as the continuous phase with dispersed therein oil and midstock fraction, wherein at least 10% by weight of said midstock fraction dispersed in the aqueous phase is crystallized;
b. providing the melted hardstock fat at a temperature of between 30°C and 60°C;
c. combining the water-continuous dispersion of step a. with the melted hardstock fat of step b.;
d. subjecting the mixture obtained after step c. to a high shear device to provide a fat-continuous emulsion,
wherein the temperature of the mixture obtained from step c. is below the melting point of the hardstock fat.

2. Process according to claim 1, wherein the dispersion of step a. is obtained by mixing continuously in-line an aqueous dispersion of the midstock at a temperature of from 0 to 15°C with the oil at a temperature of from 0 to 25°C.

3. Process according to claim 1, wherein the dispersion of step a. is obtained by providing a stirred tank comprising the oil dispersed in the aqueous phase and the midstock dispersed in the aqueous phase, which stirred tank is held at a temperature of from 0 to 15°C for at least 30 minutes.

4. Process according to any of the preceding claims, wherein the temperature of the aqueous dispersion in step a. is between 0 and 10°C.

5. Process according to any of the preceding claims, wherein the temperature of the melted hardstock in step b. is between 30 and 55°C, preferably between 35°C and 50°C, even more preferably between 35°C and 45°C.

6. Process according to any of the preceding claims, wherein at least 20% by weight of said midstock fraction dispersed in the aqueous phase is crystallized.

7. Process according to any of the preceding claims, wherein the midstock is a dairy fat.

8. Process according to any of the preceding claims, wherein the water-continuous dispersion of step a. comprises 50-100% (by weight based on the aqueous dispersion) of cream.

9. Process according to any of the preceding claims, wherein the high shear device is a high shear mixing process in a high shear mixer having a rotor and a stator, which mixer has a residence time of less than 3 seconds, and sufficient shear to effect emulsification of water droplets in oil having a droplet size d_{3,3}. of less than 15 micrometer.

10. Process according to any of the preceding claims, wherein subjecting the mixture in step d. to a high shear device is followed by subjecting the mixture to a pin stirrer.

11. Process according to any of the preceding claims, wherein the weight ratio oil : midstock is between 1 : 0.2 and 1 : 3.

12. Process according to any of the preceding claims, wherein the weight ratio of vegetable oil: hardstock is from 1 : 0.1 to 1 : 1.

13. Process according to any of the preceding claims, wherein the fat continuous emulsion is a spreadable emulsion.

14. Process according to any of the preceding claims, wherein the composition comprises 40-80% fat.

15. Process according to any of the preceding claims, wherein said fat phase comprises 5-25% midstock (weight % on total fat phase), 5-30 % hardstock (weight % on total fat phase), and 30-70% oil (weight % on total fat phase.

## Patentansprüche

1. Verfahren zur Herstellung einer Emulsion mit kontinuierlicher Fettphase, wobei die Emulsion 15-70 % einer wässrigen Phase und 30-85 % einer Fettphase umfasst, wobei die Fettphase
1-35% Midstock (Gew.-% über gesamte Fettphase), 3-50% Hardstock (Gew.-% über gesamte Fettphase) und 10-80 % Öl (Gew.-% über gesamte Fettphase) umfasst, wobei das Verfahren die folgenden Schritte umfasst:
a. Bereitstellen einer Dispersion mit kontinuierlicher Wasserphase bei einer Temperatur von zwischen 0°C und 15 °C, umfassend eine wässrige Phase als die kontinuierliche Phase mit Öl- und Midstockfraktion darin dispergiert, wobei mindestens 10 Gew.-% der in der wässrigen Phase dispergierten Midstockfraktion kristallisiert ist;
b. Bereitstellen des geschmolzenen Hardstockfetts bei einer Temperatur von zwischen 30 °C und 60 °C;
c. Kombinieren der Dispersion mit kontinuierlicher Wasserphase von Schritt a. mit dem geschmolzenen Hardstockfett von Schritt b.;
d. Aussetzen der nach Schritt c. erhaltenen Mischung einer Vorrichtung mit hoher Scherkraft, um eine Emulsion mit kontinuierlicher Fettphase bereitzustellen,
wobei die Temperatur der aus Schritt c. erhaltenen Mischung unter dem Schmelzpunkt des Hardstockfetts liegt.

2. Verfahren nach Anspruch 1, wobei die Dispersion von Schritt a. durch kontinuierliches In-Line-Mischen einer wässrigen Dispersion des Midstocks bei einer Temperatur von 0 bis 15 °C mit dem Öl bei einer Temperatur von 0 bis 25 °C erhalten wird.

3. Verfahren nach Anspruch 1, wobei die Dispersion von Schritt a. durch Bereitstellen eines Rührkessel erhalten wird, der das in der wässrigen Phase dispergierte Öl und den in der wässrigen Phase dispergierten Midstock umfasst, wobei der Rührkassel mindestens 30 Minuten lang bei einer Temperatur von 0 bis 15 °C gehalten wird.

4. Verfahren nach einem der vorstehenden Ansprüche, wobei die Temperatur der wässrigen Dispersion in Schritt a. zwischen 0 und 10 °C beträgt.

5. Verfahren nach einem der vorstehenden Ansprüche, wobei die Temperatur des geschmolzenen Hardstocks in Schritt b. zwischen 30 und 55 °C, vorzugsweise zwischen 35 °C und 50 °C, sogar bevorzugter zwischen 35 °C und 45 °C beträgt.

6. Verfahren nach einem der vorstehenden Ansprüche, wobei mindestens 20 Gew.-% der in der wässrigen Phase dispergierten Midstockfraktion kristallisiert ist.

7. Verfahren nach einem der vorstehenden Ansprüche, wobei der Midstock ein Milchfett ist.

8. Verfahren nach einem der vorstehenden Ansprüche, wobei die Dispersion mit kontinuierlicher Wasserphase von Schritt a. 50-100 Gew.-% (basierend auf der wässrigen Dispersion) Creme umfasst.

9. Verfahren nach einem der vorstehenden Ansprüche, wobei die Vorrichtung mit hoher Scherkraft ein Mischverfahren mit hoher Scherkraft in einem Mischer mit hoher Scherkraft ist, der einen Rotor und einen Stator aufweist, wobei der Mischer eine Verweildauer von weniger als 3 Sekunden und genügend Scherkraft aufweist, um eine Emulgierung von Wassertröpfchen in Öl zu bewirken, die eine Tröpfchengröße d_{3,3}. von weniger als 15 Mikrometer aufweisen.

10. Verfahren nach einem der vorstehenden Ansprüche, wobei dem Aussetzen der Mischung in Schritt d. einer Vorrichtung mit hoher Scherkraft ein Aussetzen der Mischung einem Stiftmischer folgt.

11. Verfahren nach einem der vorstehenden Ansprüche, wobei das Gewichtsverhältnis von Öl : Midstock zwischen 1 : 0,2 und 1 : 3 beträgt.

12. Verfahren nach einem der vorstehenden Ansprüche, wobei das Gewichtsverhältnis von Pflanzenöl : Hardstock von 1 : 0,1 bis 1 : 1 beträgt.

13. Verfahren nach einem der vorstehenden Ansprüche, wobei die Emulsion mit kontinuierlicher Fettphase eine streichbare Emulsion ist.

14. Verfahren nach einem der vorstehenden Ansprüche, wobei die Zusammensetzung 40-80 % Fett umfasst.

15. Verfahren nach einem der vorstehenden Ansprüche, wobei die die Fettphase 5-25 % Midstock (Gew.-% über gesamte Fettphase), 5-30 % Hardstock (Gew.-% über gesamte Fettphase) und 30-70 % Öl (Gew.-% über gesamte Fettphase) umfasst.

## Revendications

1. Procédé de préparation d'une émulsion continue grasse, laquelle émulsion comprend 15 à 70% d'une phase aqueuse et 30 à 85% d'une phase grasse, ladite phase grasse comprenant 1 à 35% de base semi-solide (% en poids de la phase grasse totale), 3 à 50% de base solide (% en poids de la phase grasse totale) et 10 à 80% d'huile (% en poids de la phase grasse totale), lequel procédé comprenant les étapes consistant à:
a. fournir une dispersion continue aqueuse à une température comprise entre 0°C et 15°C, comprenant une phase aqueuse en tant que phase continue dans laquelle sont dispersés de l'huile et une fraction de base semi-solide, dans laquelle au moins 10% en poids de ladite fraction de base semi-solide dispersée dans la phase aqueuse est cristallisée ;
b. fournir la base solide grasse fondue à une température comprise entre 30°C et 60°C ;
c. combiner la dispersion continue aqueuse de l'étape a. avec la base solide grasse fondue de l'étape b. ;
d. soumettre le mélange obtenu après l'étape c. à un dispositif à fort cisaillement pour fournir une émulsion continue grasse,
dans lequel la température du mélange obtenu à l'étape c. est en dessous du point de fusion de la base solide grasse.

2. Procédé selon la revendication 1, dans lequel la dispersion de l'étape a. est obtenue en mélangeant en continu en ligne, une dispersion aqueuse de base semi-solide à une température de 0 à 15°C avec l'huile à une température de 0 à 25°C.

3. Procédé selon la revendication 1, dans lequel la dispersion de l'étape a. est obtenue en fournissant un réservoir agité comprenant l'huile dispersée dans la phase aqueuse et la base semi-solide dispersée dans la phase aqueuse, lequel réservoir agité est maintenu à une température de 0 à 15°C pendant au moins 30 minutes.

4. Procédé selon l'une quelconque des revendications précédentes, dans lequel la température de la dispersion aqueuse à l'étape a. est comprise entre 0 et 10°C.

5. Procédé selon l'une quelconque des revendications précédentes, dans lequel la température de base solide fondue à l'étape b. est comprise entre 30 et 55°C, de préférence entre 35°C et 50°C, encore plus préférentiellement entre 35°C et 45°C.

6. Procédé selon l'une quelconque des revendications précédentes, dans lequel au moins 20% en poids de ladite fraction de base semi-solide dispersée dans la phase aqueuse est cristallisée.

7. Procédé selon l'une quelconque des revendications précédentes, dans lequel la base semi-solide est une graisse de lait.

8. Procédé selon l'une quelconque des revendications précédentes, dans lequel la dispersion continue aqueuse de l'étape a. comprend 50 à 100% (en poids de la dispersion aqueuse) de crème.

9. Procédé selon l'une quelconque des revendications précédentes, dans lequel le dispositif à fort cisaillement est un procédé de mélange à fort cisaillement dans un mélangeur à fort cisaillement ayant un rotor et un stator, lequel mélangeur a un temps de séjour inférieur à 3 secondes et un cisaillement suffisant pour effectuer l'émulsification. de gouttelettes d'eau dans l'huile ayant une taille de gouttelettes d_{3,3}. de moins de 15 micromètres.

10. Procédé selon l'une quelconque des revendications précédentes, dans lequel le mélange de l'étape d. soumis à un dispositif à fort cisaillement est suivi en soumettant le mélange à un agitateur à broche.

11. Procédé selon l'une quelconque des revendications précédentes, dans lequel le rapport en poids d'huile et de base semi-solide est compris entre 1 : 0,2 et 1 : 3.

12. Procédé selon l'une quelconque des revendications précédentes, dans lequel le rapport en poids d'huile végétale : base solide est de 1 : 0,1 à 1 : 1.

13. Procédé selon l'une quelconque des revendications précédentes, dans lequel l'émulsion continue grasse est une émulsion pouvant être étalée.

14. Procédé selon l'une quelconque des revendications précédentes, dans lequel la composition comprend 40 à 80% de graisse.

15. Procédé selon l'une quelconque des revendications précédentes, dans lequel ladite phase grasse comprend de 5 à 25% de base semi-solide (% en poids de la phase grasse totale), de 5 à 30% de base solide (% en poids de la phase grasse totale) et de 30 à 70% d'huile (% en poids de la phase grasse totale).
